# EUROPÄISCHE PATENTSCHRIFT

(11) **EP 2 665 688 B1**
(45) Veröffentlichungstag und Bekanntmachung des Hinweises auf die Patenterteilung: **03.08.2016**
(21) Anmeldenummer: 11819044.6
(22) Anmeldetag: 21.12.2011
(51) Int. Cl.: C03C 1/00, C03C 1/02, C03C 13/06

(54) **ROHMATERIAL ZUR HERSTELLUNG VON BASALTFASERN**
RAW MATERIAL FOR PRODUCING BASALT FIBRES
MATIÈRE PREMIÈRE POUR LA FABRICATION DE FIBRES DE BASALTE

(30) Priorität: 22.12.2010 AT 21172010
(43) Veröffentlichungstag der Anmeldung: 27.11.2013
(73) Patentinhaber: ASA.TEC GmbH, A-3550 Langenlois (AT)
(72) Erfinder: SCHINKINGER, Thomas, A-4072 Alkoven (AT); MAYER, Anton, A-8700 Leoben (AT)
(74) Vertreter: Burger, Hannes
(86) Internationale Anmeldenummer: PCT/AT2011/050051
(87) Internationale Veröffentlichungsnummer: WO 2012/083334

(56) Entgegenhaltungen:
- EP-A1- 1 561 736
- EP-A2- 0 768 283
- WO-A1-00/73233
- WO-A1-97/22563
- AT-A4- 509 990

## Beschreibung

Die Erfindung betrifft eine Rohmaterialbeschickung für eine Schmelze zur Herstellung von endlosen Mineralfasern sowie ein Verfahren zur Herstellung von endlosen Mineralfasern aus einer Schmelze und die Verwendung der erfindungsgemäßen Rohmaterialbeschickung.

Mineralfasern sind Fasern aus anorganischen Rohstoffen. Mineralfasern umfassen auch Basaltfasern, die industriell hergestellte, dünne Gesteinsfasern, insbesondere Fasern aus Basalt sind.

Allgemein gesprochen, obgleich Mineralfasern ein zu Glasfasern ähnliches Erscheinungsbild haben, ist deren chemische Zusammensetzung aufgrund des hohen Eisen- sowie Kalzium- und Magnesiumgehalts und einem verhältnismäßig niedrigen Anteil von Siliciumdioxid und Aluminium signifikant verschieden von jener der Glasfasern.

Man muss hier jedoch klar zwischen Basaltwolle und Endlosbasaltfaser unterscheiden. Endlosbasaltfasern sind gesundheitlich unbedenklich. Nach dem aktuellen wissenschaftlichen Kenntnisstand geht man davon aus, dass nur Fasern mit einer Länge >5 µm, einem Durchmesser <3 µm und einem Längen/dicken-verhältnis >3 (WHO Fasern) beim Menschen nach Einatmung möglicherweise Lungentumoren induzieren können. Für dickere Fasern (Durchmesser >3 µm) wird ein solches Risiko nicht erwartet, weil diese dickeren Fasern beim Einatmen in der Nase abgeschieden werden und deshalb nicht in die Lunge gelangen können.

Industrielle Anwendungsmöglichkeiten der Mineralfasern sind zahlreich und vielfältig. Die physikalischen Eigenschaften und damit die Anwendungsgebiete sind denen der Glasfaser ähnlich. Basaltfasern werden als Verstärkungsfasern in Faser-Kunststoff-Verbunden, wie Leichtbau bei PKW und Nutzfahrzeugen, in der Raumfahrt, Rüstungs- und Flugzeugindustrie etc. oder als Hitzeschutzmaterial eingesetzt. Sie sind zur Verwendung in zahlreichen Hochtemperaturanwendungen geeignet. Mit neuen Technologien können auch feinste Fasern mit einer Dicke von unter 0,01 mm hergestellt und zu Gewebe verarbeitet werden.

Basaltfaser, genauer gesagt die Endlosbasaltfaser (EBF), wird in einem Schmelzprozess hergestellt. Dabei wird Basaltgestein mit definierten chemischen Eigenschaften in einem komplexen Schmelzverfahren zu Basaltfasern veredelt. Sie werden aus einer flüssigen Basaltschmelze bei etwa 1400 °C hergestellt. Die Zusammensetzung der Schmelze beeinflusst die physikalischen und chemischen Eigenschaftsmerkmale der Basaltfaser.

Es ist allgemein bekannt, zur Herstellung von Mineralfasern Gesteine, wie Basalt, Dolomit, Kalkstein oder Hüttenschlacke einzusetzen. Basalte sind jedoch für das Schmelzen im Kupolofen oder Elektroofen nicht gut geeignet. Sie erweichen bei relativ niedriger Schmelztemperatur, sind aber bei weiterer Temperatursteigerung über ein großes Temperaturintervall recht zähflüssig. Dadurch sind ein kontinuierlicher Schmelzprozess und ein gleichmäßiges Ausfließen der Schmelze aus dem Schmelzaggregat nicht gewährleistet. Durch das Zusetzen von basischen Zuschlagstoffen wie Kalkstein oder Dolomit oder geschäumte Hochofenschlacke zum Basalt wird zwar ein gleichmäßiger Schmelzfluss erreicht, gleichzeitig aber auch ein kurzes Erweichungsintervall. Das wirkt sich bei der nachfolgenden Faserherstellung sowohl auf die Faserqualität als auch auf die Faserausbeute nachteilig aus.

Aus der DD 223 435 A1 ist Schmelzgut aus 75 % bis 45% Basalt und 25 % bis 55 % Diabas, zur Herstellung von Mineralfasern aus schmelzflüssigem Gestein bekannt. Dem Schmelzgut kann bis zu 10 % Hochofenschlacke oder Kalkstein zugesetzt werden. Vorarbeiten zum Homogenisieren oder Stückigmachen der Bestandteile vor ihrem Einsatz in das Schmelzaggregat sich nicht erforderlich.

Aufgabe der vorliegenden Erfindung ist es eine Rohmaterialbeschickung für eine Schmelze zur Herstellung endloser Mineralfasern zur Verfügung zu stellen, wobei günstige Eigenschaften der Schmelze erzielt werden sollen um die Herstellung endloser Mineralfasern hoher Faserqualität, insbesondere Endlosbasaltfasern, zu verbessern.

Die Aufgabe der Erfindung wird jeweils eigenständig durch eine Rohmaterialbeschickung umfassend 30 % bis 70 % Basalt und/oder Diabas, 10 % bis 40 % Quarzkomponente, insbesondere Quarzsand, 5 % bis 30 % Schlacke, insbesondere Hochofenschlacke und 2% bis 20% Ton, insbesondere Tonminerale, sowie ein Verfahren zur Herstellung von endlosen Mineralfasern aus einer Schmelze, die aus Rohmaterial umfassend 30 % bis 70 % Basalt und/oder Diabas, 8 % bis 40 % Quarzkomponente, insbesondere Quarzsand, und 5 % bis 30 % Schlacke, insbesondere Hochofenschlacke, gebildet wird, sowie deren Verwendung zur Herstellung einer Mineralfaser als nichtmetallische Bewehrung bzw. Armierung, gelöst.

Vorteilhaft dabei erweist sich, dass durch die Verwendung von Basalt bzw. Diabas als Hauptbestandteil der Rohmaterialbeschickung ein Stoff verwendet wird, der aufgrund des extrem großen Vorkommens und laufenden Genese durch vulkanische Aktivitäten als Rohstoff unerschöpflich anzusehen ist.

Ähnliches gilt für die Verwendung von Quarzsand - die weltweiten Quarzsandreserven werden als praktisch unbegrenzt angegeben. Durch die Verwendung von Quarzsand wird der gewünschte Siliziumdioxidanteil der Endlosbasaltfaser erreicht, der als Netzwerkbildner erforderlich ist.

Schlacke bezeichnet in der Metallurgie einen glasig oder kristallin erstarrten Schmelzrückstand nichtmetallischer Art. Sie bestehen im wesentlichen aus Kalksilikaten und silikatischem Glas. Der Glasanteil ist für gewöhnlich > 75 %. Schlacke, insbesondere Hochofenschlacke, dient vorteilhafterweise um den Siliziumdioxidanteil und somit den geforderten Anteil als Netzwerkbildner in der Schmelze bzw. in der Mineralfaser zu erzielen. Durch die Zugabe der erfindungsgemäßen Rohmaterialien zur Herstellung von Mineralfasern können die Kosten für die Herstellung gering gehalten werden im Vergleich zur Zugabe der erforderlichen Stoffe in Reinform.

Durch die Verwendung der beschriebenen Rohmaterialien wie Basalt bzw. Diabas, Quarzsand und Hochofenschlacke kann die Menge weiterer Zuschlagstoffe, die einerseits die Kosten für die Herstellung der Mineralfasern, insbesondere Endlosbasaltfasern erhöhen und andererseits auch umweltbelastend sein können, vermieden bzw. so niedrig wie möglich gehalten.

Basaltfasern aus den erfindungsgemäßen Rohmaterialien enthalten keine giftigen und/oder gefährlichen Komponenten. Die erfindungsgemäßen Endlosfilamente sind gerichtete Fasern mit einem mittleren Faserdurchmesser > 9 µm und enthalten wegen der geringen Standardabweichung von etwa 10 % keine Fasern mit einem Durchmesser < 3 µm. Sie splittern auch nicht längs (fibrillieren), wodurch keine Faserbruchstücke entstehen, die die Alveolen der Lunge penetrieren können. Gemäß TRGS 521 gelten Partikel mit Längen von über 5 µm, Durchmesser von unter 3 µm und Länge zu Durchmesser Verhältnisse von größer 3:1 als Faserstaub. Die Basaltfaser ist so dick, dass sie nicht in die Lunge gelangen kann, außerdem fibrilliert sie nicht, d.h. sie spaltet sich nicht der Länge nach wodurch sie dünner werden könnte. Die Halbwertszeit, das ist jene Zeit die gebraucht wird um die Hälfte eines im Körper befindlichen Material abzubauen, beträgt bei der Basaltfaser deutlich kürzer als 40 Tage, damit entfällt eine Einstufung in die kanzerogenen Stoffe.

Durch die erfindungsgemäße Zusammensetzung des Rohmaterials für die Schmelze zur Herstellung von endlosen Mineralfasern umfassend 45 % bis 55 % Basaltgestein und/oder Diabas, 19 % bis 34 % Quarzsand und 7 % bis 13 % Schlacke, insbesondere Hochofenschlacke, wird eine hohe Faserausbeute bei guter Faserqualität erzielt. So können konstante Spulengrößen ohne Filamentbruch hergestellt werden.

Die aus den erfindungsgemäßen Rohmaterialien hergestellte Endlosbasaltfaser zeichnet sich vor allem durch hohe Temperaturbeständigkeit, hohe Reißfestigkeit, hohe chemische und alkalische Beständigkeit, sehr gute Dämm- und Dehnungseigenschaften und gute Recyclingfähigkeit aus.

Feinere Fasern stehen neben höherer spezifischer Oberfläche für höhere spezifische Festigkeit. Aufgrund des Eigenschaftsprofils und hier vor allem des höheren E-Moduls, der höheren chemischen Beständigkeit und der höheren Temperaturstabilität weisen diese Endlosbasaltfasern deutliche Vorteile gegenüber E-Glasfasern auf. Die Basaltfasern können in Konkurrenz zur Glasfaser treten. Dabei kommt ein Ersatz durch Basaltfasern vor allem in jenen Bereichen in Frage, in denen die Kombination von höherem E-Modul, erweiterter Temperaturbereich und verbesserte Chemikalienstabilität, vor allem im alkalischen Bereich, von Bedeutung sind. Die Basaltfaser etabliert sich dabei in Nischen, in denen Glasfasern nur eingeschränkt eingesetzt werden können, eine Verwendung von sehr teuren Karbonfasern jedoch wirtschaftlich nicht vertretbar ist. Die Endlosbasaltfasern kann als Glasfaserersatz verwendet, z.B. als wärme- und schalldämmender Füllstoff, etc. verwendet werden. Da die Endlosbasaltfaser auch sehr hitzebeständig ist, kann sie auch als Ersatz für die Asbestfaser verwendet werden. Es gibt auch Beton mit Endlosbasaltfasern, welcher statt Stahlbeton verwendet werden kann.

Die stoffliche Wiederverwertung von Basaltfasern ist wie bei Glas problemlos möglich. Glas weist bereits eine Recyclingquote von über 80 % auf. Aus technischer Sicht kann für Basaltfasern eine höhere Recyclingquote erreicht werden, da sie aus natürlichen Rohstoffen gewonnen werden.

Der Vorteil gegenüber herkömmlichen Fasern ist auch, dass Endlosbasaltfasern recyclebar sind, weil sie aus natürlichen Rohstoffen gewonnen werden.

Von Vorteil erweist sich, dass 2 % bis 20 %, insbesondere 5 % bis 12 %, Ton, insbesondere Tonminerale und Beimengungen, enthalten sind, weil sich Tone und ihre Folgeprodukte beim Erhitzen in härtere und festere Minerale umwandeln. Zudem dient Ton als Silizium- und Aluminiumquelle.

Borverbindungen, insbesondere Borsäure und/oder deren Derivate, insbesondere Salze, werden in einer Menge ausgewählt aus einem Bereich mit einer unteren Grenze von 1 %, insbesondere 3 %, und einer oberen Grenze von 10 %, vorzugsweise 5 %, eingesetzt, wobei Borverbindungen als Flussmittel eingesetzt werden. Zudem verbessern sie die Korrosionsbeständigkeit der Mineralfasern. Borverbindungen, insbesondere Borsäure bzw. deren Derivate, können den Wärmeausdehnungskoeffizienten erniedrigen und damit die Temperaturwechselbeständigkeit der Endlosbasaltfaser verbessern, wie z.B. bei Armierungsfasern.

Eisenverbindungen werden in einer Menge ausgewählt aus einem Bereich mit einer unteren Grenze von 0,1 %, insbesondere 0,5 %, und einer oberen Grenze von 10 %, vorzugsweise 1 %, verwendet, wobei die Eisenverbindungen als Netzwerkwandler dienen und somit das Gefüge und die Eigenschaften der Faser verändern. Netzwerkwandler werden in das vom Netzwerkbildner gebildete Gerüst eingebaut. Für gewöhnliches Gebrauchsglas - Kalk-Alkali-Glas - sind dies Natrium- bzw. Kaliumoxid und Calciumoxid. Diese Netzwerkwandler reißen die Netzwerkstruktur auf. Dabei werden Bindungen des Brückensauerstoffs in den Siliciumoxid-Tetraedern aufgebrochen. Anstelle der Atombindung mit dem Silizium geht der Sauerstoff eine Ionenbindung mit einem Alkaliatom ein.

Calciumoxid wird in einer Menge ausgewählt aus einem Bereich mit einer unteren Grenze von 1 %, insbesondere 2 %, und einer oberen Grenze von 10 %, vorzugsweise 4 %, für die Schmelze eingesetzt, wobei Calciumoxid als Netzwerkwandler dienen kann. CaO erhöht in der erfindungsgemäßen mäßigen Zugabe die Härte und chemische Beständigkeit, insbesondere die Alkalibeständigkeit, der aus der Schmelze hergestellten Mineralfaser, insbesondere Endlosbasaltfaser. Ca-Zusammensetzungen werden an der Basaltfaseroberfläche abgelegt.

Fluorträger, wie Flussspat werden in einer Menge ausgewählt aus einem Bereich mit einer unteren Grenze von 1 %, insbesondere 2 %, und einer oberen Grenze von 10 %, vorzugsweise 3 %, verwendet, wobei Flussspat als Flussmittel zugesetzt wird. Dieser Zusatzstoff erleichtert den Schmelzvorgang und die Handhabung der geschmolzenen Stoffe. Zudem verringert es die Schmelztemperatur und die Viskosität der Schmelze.

Ferner können auch Minerale und Rohstoffe ausgewählt aus einer Gruppe umfassend Metallverbindungen, wie Mangan-, Titan-, Kupfer-, Aluminium-, Cobaltverbindungen, Alkaliverbindungen, Natrium-, Kaliumverbindungen Erdalkaliverbindungen, wie Magnesium- bzw. Bariumverbindungen, Kaolin, Soda, der Rohmaterialbeschickung zugegeben werden, wodurch Endlosbasaltfasern entsprechend den gewünschten Eigenschaften hergestellt werden können.

In einer Weiterbildung der Erfindung wird Rohmaterial zumindest teilweise als Mahlgut und/oder als Formkörper, welche aus Partikeln, insbesondere Mahlgut, des Basalts und/oder Diabas, zumindest einer Quarzkomponente, insbesondere Quarzsand und Schlacke, insbesondere Hochofenschlacke, gebildet sind, zur Bildung der Schmelze eingesetzt, wodurch der Schmelzvorgang erleichtert werden kann, indem homogene Bedingungen im Schmelzofen geschaffen werden und somit sowohl die Mineralfaserqualität verbessert als auch die Mineralfaserausbeute erhöht werden.

Besonders vorteilhaft erweisen sich Formkörper mit einer Größe mit einer oberen Grenze von 100 mm, weil dadurch der Energieeintrag zum Aufschmelzen der Formkörper im Schmelzofen gering gehalten werden kann ohne gleichzeitig die Schmelzeigenschaften negativ zu beeinflussen.

Vorteilhaft bei der Verwendung des erfindungsgemäßen Verfahrens zur Herstellung von endlosen Mineralfasern aus einer Schmelze aus Rohmaterial umfassend 30 % bis 70 % Basalt und/oder Diabas, 10 % bis 40 % Quarzsand und 5 % bis 30 % Schlacke, insbesondere Hochofenschlacke, erweist sich, dass sämtliche Be- und Verarbeitungsvorgänge mit Basaltprodukten den Kyoto-2012 Vorschriften entsprechen. Weder beim Erhitzen entstehen giftige Gase, Schäume oder Dämpfe noch andere den Menschen oder der Umwelt belastende Produkte oder Abfälle.

Von Vorteil erweist sich auch, dass das Rohmaterial zumindest teilweise als Formkörper, welche aus Partikeln des Basalts und/oder Diabas und zumindest Quarzsands und der Schlacke gebildet werden, zur Bildung der Schmelze verwendet wird. Bei nach dem gegenständlichen Verfahren hergestellten Fasern ist die Entstehung von Faserstaub nicht zu erwarten, sodass weder in der Produktion, bei der Verarbeitung, bei der Verwendung noch bei der Entsorgung dieser Fasern eine gesundheitliche Gefährdung der dabei involvierten Personen zu erwarten ist. Für bestimmte Anwendungen können mit dem erfindungsgemäßen Verfahren hergestellte Basaltfasern auch als Ersatz von Asbestfasern eingesetzt werden.

Einführend sei festgehalten, dass in den unterschiedlich beschriebenen Ausführungsbeispielen gleiche Teile mit gleichen Bezeichnungen versehen werden, wobei die in der gesamten Beschreibung enthaltenen Offenbarungen sinngemäß auf gleiche Teile mit gleichen Bezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

Die Prozentangaben im Zusammenhang mit der Erfindung beziehen sich auf Gewichtsprozent, sofern nichts anderes angeführt ist.

Unter Basalt wird im Zusammenhang mit der Erfindung ein basisches Ergussgestein verstanden. Es besteht vor allem aus einer Mischung von Eisen-und Magnesium-Silikaten mit Olivin und Pyroxen sowie calciumreichem Feldspat (Plagioklas). Vorherrschende Mineralgruppen sind Plagioklase, Pyroxene, wie überwiegend als Augit oder Diopsid. Olivine, Biotit, Amphibolite, wie Hornblende, Alkalifeldspat, Quarz, Hornfels, und Foide treten in einigen Basaltvorkommen auf. Auch Diabas, Melaphyr, Foidit, Latit, Phonolith, Melilithit, Pikrit, Tephrit, Andesit, Porphyr, Spilit, Trachyt, etc. werden im Zusammenhang mit der Erfindung unter Basalt verstanden. Insgesamt erweisen sich Basalte von ihrer chemischen Zusammensetzung her als ausgesprochen variable Gesteine, was im Widerspruch zu ihrem recht einheitlichen Aussehen steht.

Die vorliegende Erfindung beschreibt Rohmaterial, das für die Herstellung der Schmelze zur weiteren Verarbeitung zu Mineralfasern, insbesondere Endlosbasaltfasern, verwendet wird. Im Zusammenhang mit der Erfindung handelt es sich um MMMF (man made mineral fibers) - also synthetisch hergestellte Mineralfasern.

Mineralfasern können daher kostengünstig hergestellt werden. Sie können aus einer Vielzahl von Materialien einschließlich Eruptivgestein und Basalt, aus Schlacke, die von zum Herstellen von Stahl und anderen Metallen verwendeten Hochöfen erzeugt wird, und aus Abfallprodukten der Phosphatindustrie hergestellt werden kann.

Als Basalt kann u.a. Gestein von den Basaltvorkommen Radlpaß, Klöch, Oberhaag, Kirn, Solosnica, Losonec, Kamenec, Zelesice, Zbraslav, Belice, Okucani, Rakovac, Ceramide, etc. verwendet werden.

Vorzugsweise wird der Hauptbestandteil der Schmelze von Basalt gebildet. Die Zusammensetzung der Schmelze beeinflusst die chemischen und physikalischen Eigenschaftsmerkmale der Basaltfaser, insbesondere durch den Eisengehalt.

Durch die Verwendung von Quarzkomponenten, insbesondere Quarzsand, in Kombination mit Schlacke, insbesondere Hochofenschlacke, zur Herstellung der Schmelze ist es möglich den erforderlichen Gehalt an SiO₂ in die Schmelze einzubringen. Vielmehr ist es dadurch auch möglich das Schmelzverhalten der Schmelze günstig zu beeinflussen und anschließend ein amorphes Erstarren der Schmelze zu ermöglichen. Für die Erfindung zu verwendender Quarzsand besteht günstigerweise aus über 95 % Si0₂.

Durch die Zugabe weiterer Stoffe können die Ausbeute und die Qualität der endlosen Mineralfaser verbessert werden.

Ton, insbesondere Tonminerale sowie Beimengungen und Folgeprodukte bewirken eine höhere Festigkeit der aus den erfindungsgemäßen Rohmaterialien hergestellten endlosen Mineralfaser. Ton dient als Quelle für Si02 und A1203 und gegebenenfalls Fe2O3. So weisen typische für die Erfindung zu verwendende Tone zwischen 50 bis 90% SiO₂, 10 bis 30 % Al₂O₃ und bis 20 % Fe₂O₃ neben geringen Mengen von CaO, MgO, K₂O, TiO₂ auf.

Flussmittel, wie Fluorverbindungen, insbesondere Flussspat und/oder Borverbindungen, wie Borsäure beeinflussen die Viskosität der Schmelze und somit können dadurch die Herstellungsparameter für das nachfolgenden Zieh- bzw. Spinnverfahren optimiert werden.

Calciumoxid und Eisenverbindungen werden als Netzwerkwandler eingesetzt. Zudem können durch den Eisengehalt auch die polyvalenten Eigenschaften des Eisens gezielt genutzt werden, beispielsweise die optischen Eigenschaften, insbesondere die Infrarotabsorption, mechanischen Eigenschaften, wie Zugfestigkeit, Bindeeigenschaften zu Kunststoffen, etc. Eisenverbindungen werden auch beigemengt um die Fließeigenschaften der Schmelze zu verbessern bzw. für die Farbgebung.

Feldspat dient ebenfalls als SiO₂ und Al₂O₃ Quelle. Typische für die Erfindung zu verwendenden Feldspäte weisen einen SiO₂ Gehalt von über 60% und einen Al₂O₃ Gehalt von über 15 % auf. Kaolin wird ebenfalls als SiO₂ und Al₂O₃ Quelle verwendet.

Durch die Verwendung der Rohmaterialien in Formkörpern wird eine einheitliche Schmelze mit einer Viskosität gebildet, aus der endlose Mineralfasern gezogen bzw. gesponnen werden können.

Als Schlacke wird gemahlene Hochofenschlacke mit den Hauptbestandteilen SIO₂, CaO, Al₂O₃, und MgO verwendet. Eine Zusammensetzung eines Beispiels einer für die Erfindung zu verwendende Hochofenschlacke ist nachfolgend angeführt: 37 % SiO₂, 36,3 % CaO, 8,4 % MgO, 10,6 % Al₂O₃, 0,4 % Fe₂O₃, 4,1 % Na₂O, 0,1 % P₂O₅, 1,4 % K₂O, 0,5 % TiO₂, 1,3 % MnO.

In einer Weiterbildung können auch noch synthetische Minerale und Rohstoffe ausgewählt aus einer Gruppe umfassend Eisenverbindungen, Manganverbindungen, Titanverbindungen, Borverbindungen, etc. zugegeben werden um Herstellungsparameter zu optimieren oder die Eigenschaften der Endlosbasaltfaser entsprechend zu beeinflussen.

Die genaue chemische Zusammensetzung der Basaltfaser ist von der Zusammensetzung der Schmelze und somit von den für die Bildung der Schmelze verwendeten Rohmaterialien abhängig. Aus dem Stand der Technik bekannte Basaltfasern der Firma Basaltex weisen in Massenprozent folgende Zusammensetzung auf: 52% SiO₂, 17% AL₂O₃, 9% CaO, 5 %, MgO und 17 % andere Bestandteile.

Durch die Verwendung der erfindungsgemäß genannten Rohmaterialien zur Bildung der Schmelze ist es möglich endlose Mineralfasern mit nachfolgenden Zusammensetzungen in Gew-.% herzustellen:

| Gruppe | 1 | 2 | 3 | 4 | 5 |
|---|---|---|---|---|---|
| SiO₂ | 42-51 | 51-65 | 45-55 | 48-52 | 55-65 |
| CaO | 4-18 | 6-15 | 10-20 | 18-23 | 10-15 |
| MgO | 3-10 | 2-8 | 2-10 | 10-16 | 1-4 |
| Al₂O₃ | 10-15 | 8-15 | 15-25 | 8-12 | 8-18 |
| Fe₂O₃ | 10-18 | 8-15 | 5-15 | 4-7 | 2-6 |
| Na₂O | 1-6 | 1-6 | 1-6 | 1-3 | 0,3-5 |
| P₂O₅ | 0-1 | 0-0,5 | 0-1 | - | 0,1-0,9 |
| K₂O | 0-5 | 0-5 | 0-5 | - | 1-5 |
| TiO₂ | 1-3 | 0-2 | 0-2 | 2-4 | 0,3-3 |
| MnO | 0-0,5 | 0-0,5 | 0-0,5 | - | 0,1-0,9 |
| S | nicht bestimmt | nicht bestimmt | nicht bestimmt | nicht bestimmt | nicht bestimmt |

Mineralfasern der Gruppe 1 können beispielsweise durch die Verwendung von Basalt in Klöch hergestellt werden. Mineralfasern der Gruppe 2 weisen einen erhöhten SiO₂ Anteil auf. Basaltfasern der Gruppe 3 weisen einen erhöhten Al₂O₃-Anteil auf. Für Fasern der Gruppe 4 wird als Rohmaterial Diabas und für Fasern der Gruppe 5 Andesit verwendet.

Im speziellen können endlose Mineralfasern, insbesondere Endlosbasaltfasern gemäß Röntgendiffraktionsanalyse mit folgender Zusammensetzung aus den erfindungsgemäßen Rohmaterialien hergestellt werden (geringfügige Abweichungen von 100 % in der Summe sind durch Messungenauigkeiten, Glühverluste, etc. möglich):

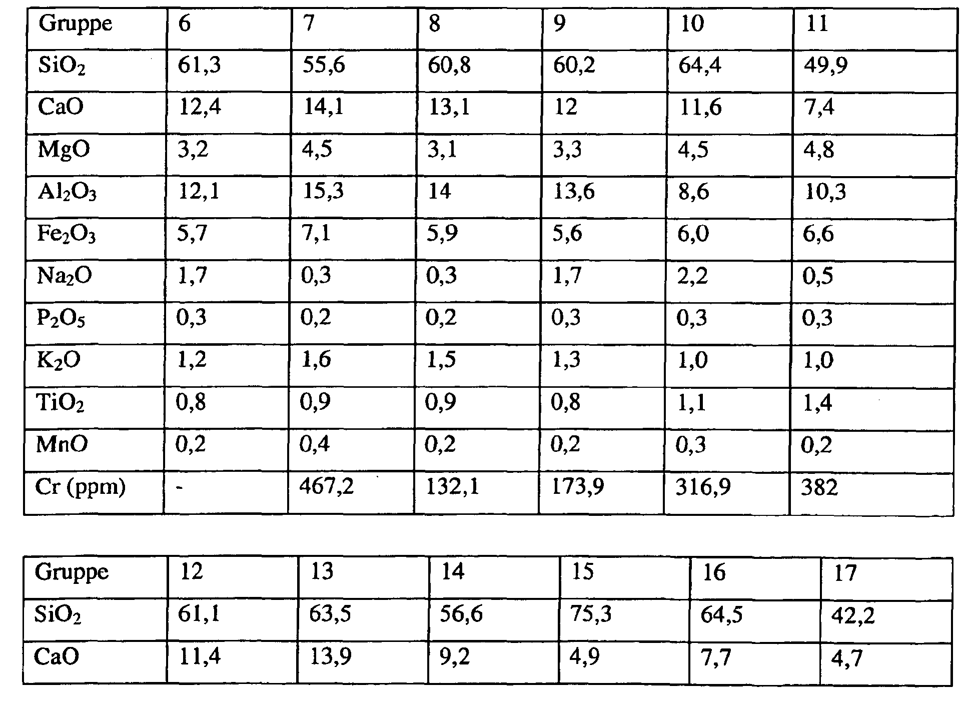

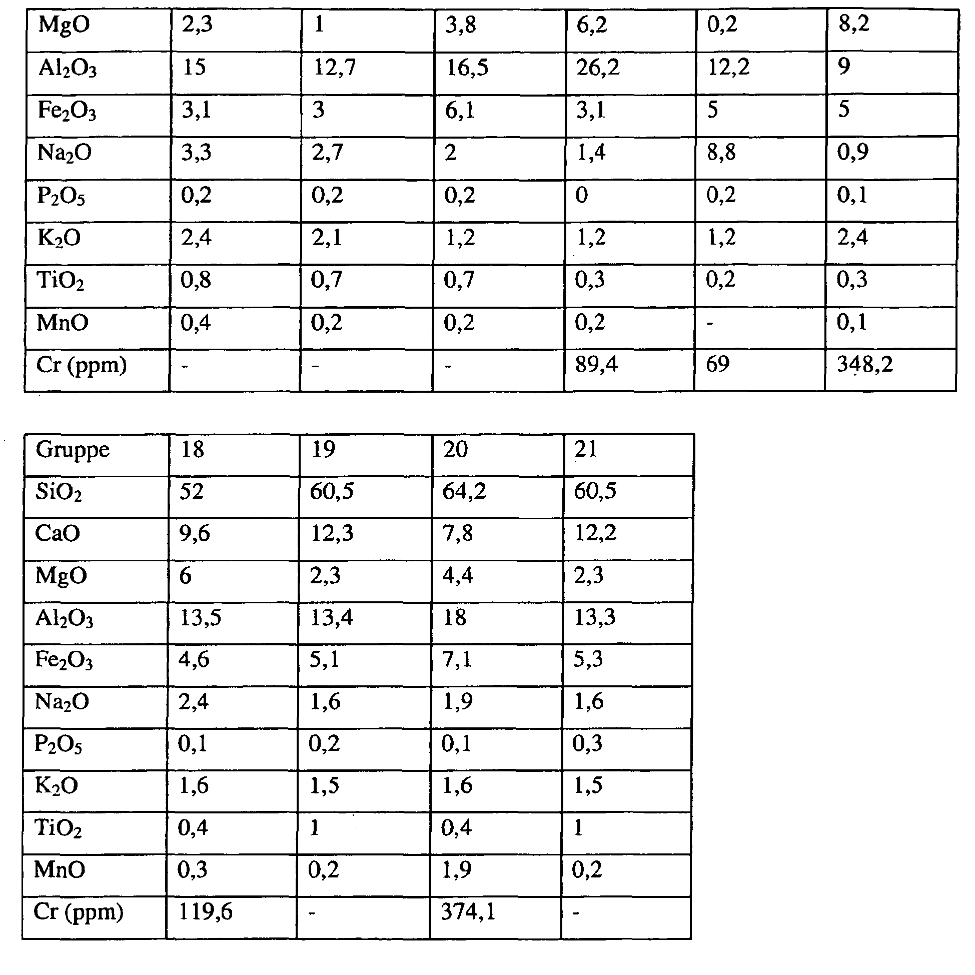

Das Rohmaterial wird vorzugsweise bevor es in den Schmelzofen gelangt als Formkörper, insbesondere mit einer Größe mit einer unteren Grenze von 1 mm und einer oberen Größe von 100 mm, hergestellt. Hierbei werden die Formkörper wie in der Patentanmeldung "Vorbehandlung von Rohmaterial zur Herstellung von Basaltfasem" der Anmelderin vom 23. 12. 2010 beschrieben verwendet.

In einer alternativen Ausführungsvariante kann das Rohmaterial auch als Mahlgut in den Schmelzofen eingebracht werden.

Das Rohmaterial als Mahlgut bzw. Formkörper wird in eine Schmelzwanne gebracht, wo mittels Elektroden das Rohmaterial geschmolzen wird. Alternativ kann das Rohmaterial auch mit Kohle oder Gas befeuert werden, wodurch es geschmolzen wird.

Als Herstellungsverfahren kann jedes aus dem Stand der Technik bekannte Verfahren zur Herstellung endloser Mineralfasern verwendet werden. So z.B. Aufschmelzen der Rohmaterialien in einem Schmelzofen, Ziehen der Schmelze zu Endlosfasern, Beschichten der Fasern, Trocknen, Spulen und anschließende zweckentsprechende Weiterverarbeitung.

Im nachfolgenden werden einige Ausführungsbeispiele zur Zusammensetzung der erfindungsgemäßen Rohmaterialbeschickung angeführt, wobei diese nicht als beschränkend betrachtet werden soll. Beispiel E gilt als Referenzbeispiel.

| | A | B | C | D | E |
|---|---|---|---|---|---|
| Basalt | 70 | 55 | 54 | - | - |
| Diabas | - | - | - | 40 | 60 |
| Quarzsand | 10 | 19 | 19 | 34 | 30 |
| Tonmineral | 7 | 12 | 12 | 5 | - |
| Hochofenschlacke | 13 | 10 | 10 | 13 | 7 |
| Borsäure | - | - | - | 5 | 3 |
| Fe₂O₃ | - | - | 1 | - | - |
| CaO | - | 4 | 4 | - | - |
| Flussspat | - | - | - | 3 | - |
| Summe | - | - | - | - | - |

In den Rohmaterialbeschickungsbeispielen A, B und C wird der Hauptanteil von Basalt gebildet und in den Ausführungsbeispielen D und E von Diabas.

Aus der Rohmaterialbeschickung A können beispielsweise Mineralfasern mit einer XRF-Analyse der Gruppe 7 hergestellt werden. Aus der Zusammensetzung B können Mineralfasern der Gruppe 8, aus der Zusammensetzung C Mineralfasern der Gruppe 9, aus der Zusammensetzung D Mineralfasern der Gruppe 10, aus der Zusammensetzung E Mineralfasern der Gruppe 11 hergestellt werden.

Weitere mögliche Zusammensetzungen der erfindungsgemäßen Rohmaterialbeschickung sind im nachfolgenden angeführt.

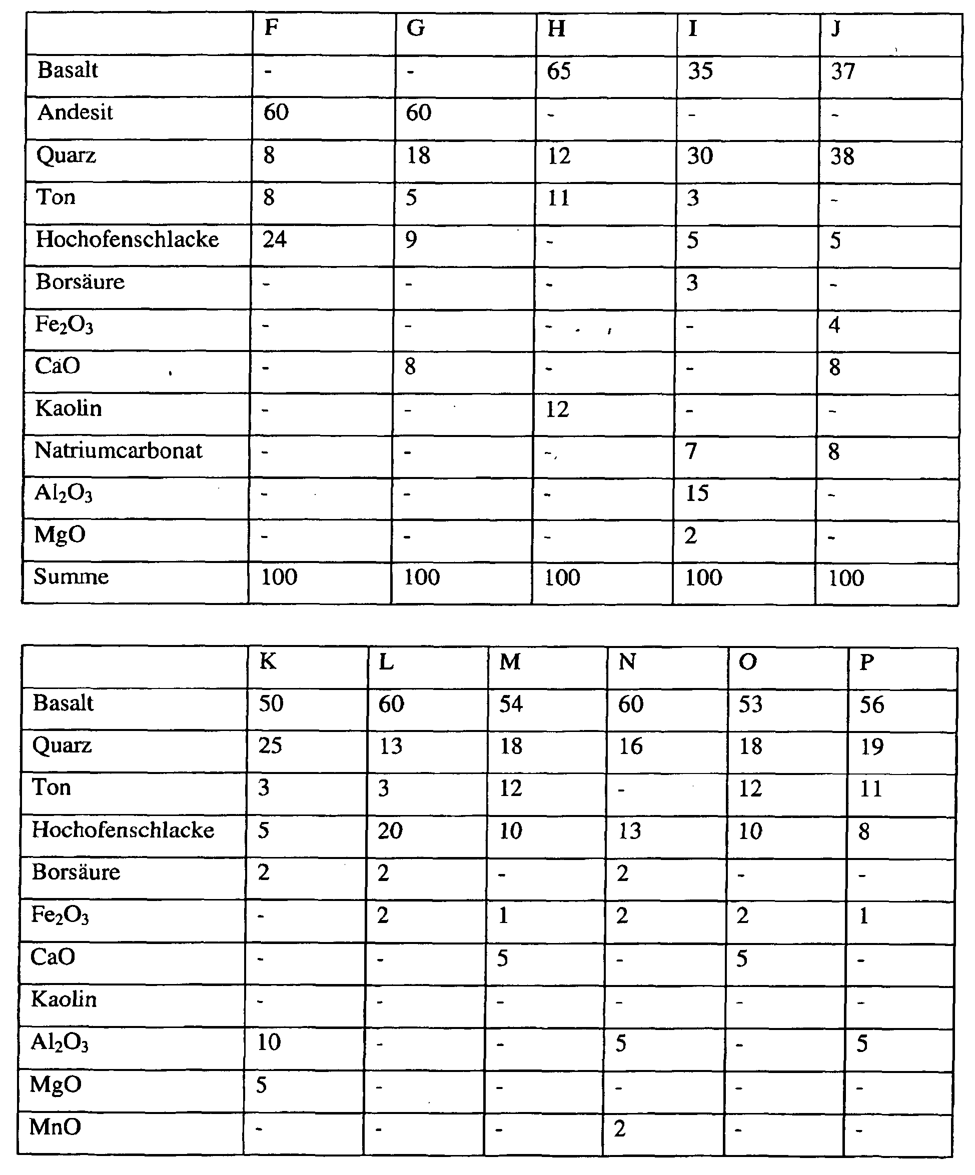

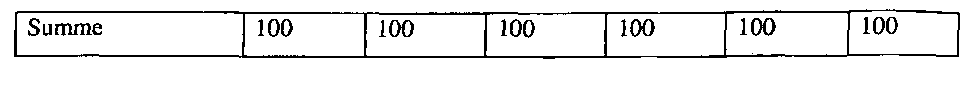

Aus der Rohmaterialbeschickung F, G, H, I, J, K, L, M, N, O und P können jeweils beispielsweise Mineralfasern mit einer XRF-Analyse der Gruppe 12, 13, 14, 15, 16, 17, 18, 19, 20, 21 und 6 hergestellt werden.

In Versuchen wurden folgende physikalische Parameter von Mineralfasern als Monofilamente aus oben angeführten Zusammensetzungen des Rohmaterials bestimmt: Titer (dtex), Spannung (cN/tex), Dehnung (%), Leistung (g/h).

Die Werte für den Titer liegen zwischen 1,2 und 9,6 dtex, für die Zugspannung liegen unter 200 cN/tex, insbesondere zwischen 1 und 100 cN/tex, vorzugsweise zwischen 6 und 60 cN/tex, für die Dehnung unter 5 %, insbesondere zwischen 1 und 4 %, vorzugsweise zwischen 1,7 und 2,4 % und für die Leistung über g/h, insbesondere zwischen 30 bis 1250 g/h, vorzugsweise zwischen 10 kg/h und 40 kg/h.

| Gruppe | Titer (dtex) | Zugspannung (cN/tex) | Dehnung (%) | Leistung (g/h) |
|---|---|---|---|---|
| 6 | 1,9 | 48 | 3,3 | 109 |
| 7 | 11,8 | 198,6 | 0,1 | 3452 |
| 8 | 12,3 | 170,6 | 2,0 | 4561 |
| 9 | 17,0 | 123,4 | 0,6 | 6578 |
| 10 | 3,6 | 198,1 | 1,5 | 1876 |
| 11. | 1,1 | 107,7 | 1,7 | 23345 |
| 12 | 3,7 | 51,2 | 2 | 34,2 |
| 13 | 1,2 | 45,9 | 2 | nicht bestimmt |
| 14 | 9,6 | 5,9 | 2,3 | nicht bestimmt |
| 15 | 2,8 | 12,5 | 1,6 | 22768 |
| 16 | 3,4 | 49,1 | 1,9 | 102,5 |
| 17 | 3,4 | 55 | 2,4 | 56,3 |
| 18 | 3,6 | 44,1 | 1,7 | 124,3 |
| 19 | 2,9 | 49,5 | 1,9 | 32,6 |
| 20 | 2 | 50,7 | 2,1 | 67,6 |
| 21 | 3 | 60,8 | 2,4 | 123,8 |
| 22 | 1,8 | 36,2 | 1 | 19765 |
| 23 | 0,9 | 65,9 | 2,1 | 27453 |

Zudem zeigte sich, dass die erfindungsgemäßen Rohmaterialbeschickungen eine Schmelze ergaben, die gut spinnbar ist, dh mit einer Geschwindigkeit von ca. 3600 m/min und auf eine Länge von 50.000 m keinen Abriss zeigt. Außerdem zeigt die aus den erfindungsgemäß hergestellten Rohmaterialien hergestellte Mineralfaser eine hohe Zugfestigkeit von über 4500 MPa bei einem mittleren Durchmesser von ca. 5 µm bis 40 µm, insbesondere 7 µm bis 20 µm.

Testergebnisse zeigten, dass die Alkalibeständigkeit von Mineralfasern aus oben angeführten Zusammensetzungen des Rohmaterials deutlich besser ist als jene von Glasfaser.

Die vorliegende Erfindung umfasst auch ein Verfahren zur Herstellung von endlosen Mineralfasern, insbesondere Basaltfasern, aus einer Schmelze wobei die Schmelze aus Rohmaterial umfassend 30 % bis 70 % Basalt, 8 % bis 40 % Quarzkomponente und 5 % bis 30 % Schlacke, insbesondere Hochofenschlacke, gebildet wird.

Weitere Stoffe die dem Verfahren zugegeben werden können sind den vorhergehenden Ausführungen zur Rohmaterialbeschickung für die Schmelze zur Herstellung von endlosen Mineralfasern, insbesondere Basaltfasern, zu entnehmen.

Aus der erfindungsgemäßen Rohmatenalbeschickung können Basaltfasern mit der in der Patentanmeldung WO 2012/088561 A2 "Endlos basaltfasern" vom 23. 12. 2010 der Anmelderin angeführten Struktur hergestellt werden, womit diese auch als Inhalt dieser Anmeldung gilt.

Die Ausführungsbeispiele zeigen mögliche Ausführungsvarianten des erfindungsgemäßen Rohmaterialbeschickung, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst.

Die den eigenständigen erfinderischen Lösungen zugrundeliegende Aufgabe kann der Beschreibung entnommen werden.

Vor allem können die einzelnen in den Ausführungsbeispielen angeführten Ausführungen den Gegenstand von eigenständigen, erfindungsgemäßen Lösungen bilden. Die diesbezüglichen, erfindungsgemäßen Aufgaben und Lösungen sind den Detailbeschreibungen zu entnehmen.

## Patentansprüche

1. Rohmaterialbeschickung für eine Schmelze zur Herstellung von endlosen Mineralfasern, **dadurch gekennzeichnet, dass** 30 % bis 70 % Basalt und/oder Diabas, 8 % bis 40 % Quarzkomponente, insbesondere Quarzsand, 5 % bis 30 % Schlacke, insbesondere Hochofenschlacke und 2 % bis 20 % Ton, insbesondere Tonminerale enthalten sind.

2. Rohmaterialbeschickung nach Anspruch 1, **dadurch gekennzeichnet, dass** 45 % bis 55 % Basalt und/oder Diabas, 19 % bis 34 % Quarzkomponente, insbesondere Quarzsand, und 7 % bis 13 % Schlacke, insbesondere Hochofenschlacke, enthalten sind.

3. Rohmaterialbeschickung nach einem der Ansprüche 1 bis 2, **dadurch gekennzeichnet, dass** Borverbindungen, insbesondere Borsäure und/oder deren Derivate, insbesondere Salze, ausgewählt aus einem Bereich mit einer unteren Grenze von 1 %, insbesondere 3 %, und einer oberen Grenze von 10 %, vorzugsweise 5 %, enthalten ist.

4. Rohmaterialbeschickung nach einem der Ansprüche 1 bis 3, **dadurch gekennzeichnet, dass** Eisenverbindungen ausgewählt aus einem Bereich mit einer unteren Grenze von 0,1 %, insbesondere 0,5 %, und einer oberen Grenze von 10 %, vorzugsweise 1 %, enthalten ist.

5. Rohmaterialbeschickung nach einem der Ansprüche 1 bis 4, **dadurch gekennzeichnet, dass** Calciumoxid ausgewählt aus einem Bereich mit einer unteren Grenze von 1 %, insbesondere 2 %, und einer oberen Grenze von 10 %, vorzugsweise 4 %, enthalten ist.

6. Rohmaterialbeschickung nach einem der Ansprüche 1 bis 5, **dadurch gekennzeichnet, dass** Fluorverbindungen, insbesondere Flussspat, ausgewählt aus einem Bereich mit einer unteren Grenze von 1 %, insbesondere 2 %, und einer oberen Grenze von 10 %, vorzugsweise 3 %, enthalten ist.

7. Rohmaterialbeschickung nach einem der Ansprüche 1 bis 6, **dadurch gekennzeichnet, dass** Minerale und Rohstoffe ausgewählt aus einer Gruppe umfassend Metallverbindungen, wie Mangan-, Titan-, Kupfer-, Cobaltverbindungen, Alkaliverbindungen, Natrium-, Kaliumverbindungen Erdalkaliverbindungen, wie Magnesium- bzw. Bariumverbindungen, enthalten sind.

8. Rohmaterialbeschickung nach einem der Ansprüche 1 bis 7, **dadurch gekennzeichnet, dass** das Rohmaterial zumindest teilweise als Mahlgut und/oder als Formkörper, welche aus Partikeln, insbesondere Mahlgut, des Basalts und/oder Diabas, zumindest einer Quarzkomponente, insbesondere Quarzsand und Schlacke, insbesondere Hochofenschlacke, gebildet sind, vorliegt.

9. Rohmaterialbeschickung nach Anspruch 8, **dadurch gekennzeichnet, dass** die Formkörper eine Größe mit einer oberen Grenze von 100 mm aufweisen.

10. Verfahren zur Herstellung von endlosen Mineralfasern aus einer Schmelze, **dadurch gekennzeichnet, dass** die Schmelze aus Rohmaterial umfassend 30 % bis 70 % Basalt und/oder Diabas, 8 % bis 40 % Quarzkomponente, insbesondere Quarzsand, und 5 % bis 30 % Schlacke, insbesondere Hochofenschlacke, gebildet wird.

11. Verfahren nach Anspruch 10, **dadurch gekennzeichnet, dass** der Schmelze zumindest einer der weiteren Stoffe gemäß einem der Ansprüche 2 bis 8 zugegeben wird.

12. Verfahren nach Anspruch 10 oder 11, **dadurch gekennzeichnet, dass** die Rohmaterialbeschickung zumindest teilweise als Formkörper, welche aus Partikeln, insbesondere Mahlgut, des Basalts und/oder Diabas und zumindest einer Quarzkomponente, insbesondere Quarzsand, und der Schlacke, insbesondere Hochofenschlacke, gebildet werden, zur Bildung der Schmelze verwendet wird.

13. Verwendung der Rohmaterialbeschickung nach einem der Ansprüche 1 bis 9 zur Herstellung einer Mineralfaser als nichtmetallische Bewehrung bzw. Armierung.

## Claims

1. A raw material charge for a melt for producing continuous mineral fibres, **characterized in that** it contains 30% to 70% of basalt and/or diabase, 8% to 40% of quartz components, in particular quartz sand, 5% to 30% of slag, in particular blast furnace slag, and 2% to 20% of clay, in particular clay minerals.

2. The raw material charge as claimed in claim 1, **characterized in that** it contains 45% to 55% of basalt and/or diabase, 19% to 34% of quartz components, in particular quartz sand, and 7% to 13% of slag, in particular blast furnace slag.

3. The raw material charge as claimed in claim 1 or claim 2, **characterized in that** it contains boron compounds, in particular boric acid and/or derivatives thereof, in particular salts, selected from a range with a lower limit of 1%, in particular 3%, and an upper limit of 10%, preferably 5%.

4. The raw material charge as claimed in one of claims 1 to 3, **characterized in that** it contains iron compounds selected from a range with a lower limit of 0.1%, in particular 0.5%, and an upper limit of 10%, preferably 1%.

5. The raw material charge as claimed in one of claims 1 to 4, **characterized in that** it contains calcium oxide selected from a range with a lower limit of 1%, in particular 2%, and an upper limit of 10%, preferably 4%.

6. The raw material charge as claimed in one of claims 1 to 5, **characterized in that** it contains fluoride compounds, in particular fluorspar, selected from a range with a lower limit of 1%, in particular 2%, and an upper limit of 10%, preferably 3%.

7. The raw material charge as claimed in one of claims 1 to 6, **characterized in that** it contains minerals and raw materials selected from a group comprising metal compounds such as manganese, titanium, copper, cobalt compounds, alkali compounds, sodium compounds, potassium compounds and alkaline-earth compounds such as magnesium or barium compounds.

8. The raw material charge as claimed in one of claims 1 to 7, **characterized in that** the raw material is at least partially present as ground material and/or shaped articles in the form of particles, in particular ground material, of basalt and/or diabase, at least one quartz component, in particular quartz sand, and slag, in particular blast furnace slag.

9. The raw material charge as claimed in claim 8, **characterized in that** the upper limit for the dimensions of the shaped articles is 100 mm.

10. A method for producing continuous mineral fibres from a melt, **characterized in that** the melt is made up of raw material comprising 30% to 70% of basalt and/or diabase, 8% to 40% of quartz components, in particular quartz sand, and 5% to 30% of slag, in particular blast furnace slag.

11. The method as claimed in claim 10, **characterized in that** at least one of the other substances as claimed in one of claims 2 to 8 is added to the melt.

12. The method as claimed in claim 10 or claim 11, **characterized in that** the raw material charge used to form the melt is at least partially made up of shaped articles which are formed from particles, in particular ground material, of basalt and/or diabase and at least one quartz component, in particular quartz sand, and slag, in particular blast furnace slag.

13. Use of the raw material charge as claimed in one of claims 1 to 9, for the production of a mineral fibre as a non-metallic reinforcement or armouring.

## Revendications

1. Charge de matière première pour l'obtention d'une masse fondue destinée à la production de fibres minérales continues, **caractérisée en ce qu'**elle comprend 30 % à 70 % de basalte et/ou de diabase, 8 % à 40 % de composant de quartz, notamment du sable de quartz, 5 % à 30 % de laitier, en particulier du laitier de haut fourneau, et 2 % à 20 % d'argile, en particulier d'argile minérale.

2. Charge de matière première selon la revendication 1, **caractérisée en ce qu'**elle comprend 45 % à 55 % de basalte et/ou de diabase, 19 % à 34 % de composant de quartz, notamment du sable de quartz, et 7 % à 13 % de laitier, en particulier du laitier de haut fourneau.

3. Charge de matière première selon la revendication 1 ou 2, **caractérisée en ce qu'**elle comprend des composés de bore, en particulier de l'acide borique et/ou des dérivés de celui-ci, en particulier des sels de celui-ci, sélectionnés dans une plage ayant une limite inférieure de 1 %, en particulier de 3 %, et une limite supérieure de 10 %, de préférence de 5 %.

4. Charge de matière première selon l'une quelconque des revendications 1 à 3, **caractérisée en ce qu'**elle comprend des composés de fer, sélectionnés dans une plage ayant une limite inférieure de 0,1 %, en particulier de 0,5 %, et une limite supérieure de 10 %, de préférence de 1 %.

5. Charge de matière première selon l'une quelconque des revendications 1 à 4, **caractérisée en ce qu'**elle comprend de l'oxyde de calcium, sélectionné dans une plage ayant une limite inférieure de 1 %, en particulier de 2 %, et une limite supérieure de 10 %, de préférence de 4 %.

6. Charge de matière première selon l'une quelconque des revendications 1 à 5, **caractérisée en ce qu'**elle comprend des composés fluorés, en particulier du spath fluor, sélectionnés dans une plage ayant une limite inférieure de 1 %, en particulier de 2 %, et une limite supérieure de 10 %, de préférence de 3 %.

7. Charge de matière première selon l'une quelconque des revendications 1 à 6, **caractérisée en ce qu'**elle comprend des minéraux et des matières premières choisis dans un groupe comprenant des composés métalliques, tels que des composés de manganèse, de titane, de cuivre et de cobalt, des composés de métaux alcalins, des composés de sodium et de potassium, des composés de métal alcalino-terreux, comme des composés de magnésium ou de baryum.

8. Charge de matière première selon l'une quelconque des revendications 1 à 7, **caractérisée en ce que** la matière première se présente au moins partiellement sous la forme d'un produit à broyer et/ou d'un corps moulé, qui sont réalisés à partir de particules, en particulier de produit à broyer, de basalte et/ou de diabase, d'au moins un composant de quartz, en particulier du sable de quartz, et de laitier, en particulier du laitier de haut fourneau.

9. Charge de matière première selon la revendication 8, **caractérisée en ce que** le corps moulé présente une taille ayant une limite supérieure de 100 mm.

10. Procédé de fabrication de fibres minérales continues à partir d'une masse fondue, **caractérisé en ce que** la masse fondue est obtenue à partir d'une matière première comprenant 30 % à 70 % de basalte et/ou de diabase, 8 % à 40 % de composant de quartz, notamment du sable de quartz, 5 % à 30 % de laitier, en particulier du laitier de haut fourneau.

11. Procédé selon la revendication 10, **caractérisé en ce qu'**au moins une des matières supplémentaires selon l'une quelconque des revendications 2 à 8 va être ajoutée à la masse fondue.

12. Procédé selon la revendication 10 ou 11, **caractérisé en ce que** la charge de matière première va être utilisée au moins partiellement sous la forme d'un corps moulé, qui est réalisé à partir de particules, en particulier de produit à broyer, de basalte et/ou de diabase, et d'au moins un composant de quartz, en particulier du sable de quartz, et de laitier, en particulier du laitier de haut fourneau, pour obtenir la masse fondue.

13. Utilisation de la charge de matière première selon l'une quelconque des revendications 1 à 9, pour la fabrication d'une fibre minérale en tant qu'armure ou armature non métallique.
